# EUROPEAN PATENT APPLICATION

(11) **EP 1 894 964 A1**
(43) Date of publication of application: **05.03.2008**
(21) Application number: 07253435.7
(22) Date of filing: 31.08.2007
(51) Int. Cl.: C08J 5/18

(54) **Heat-shrinkable pet film and method for making the same**

(30) Priority: 01.09.2006 CN 200610128531
(71) Applicant: Far Eastern Texile Ltd., Taipei (TW)
(72) Inventor: Liu, Pang Chin, Taoyuan (TW); Wu, Chih-Heng, Taoyuan (TW); Chu, Chih Wei, Taoyuan (TW); Wu, Roy, Taoyuan (TW)
(74) Representative: Thomson, Neil David

(57) **Abstract**

A heat-shrinkable PET film comprises a thermally stretched film body exhibiting shape-memory characteristics and made from a PET material of a modified PET composition that includes terephthalic acid, ethylene glycol, and a modifier selected from 1,3-dihydroxy-2-methylpropane, 1,3-dihydroxy-2-methylpropane alkoxylate, 2,5-dimethyl-2,5-hexanediol, and combinations thereof.

## Description

This invention relates to a heat-shrinkable PET film and a method for making the same, and particularly to a heat-shrinkable PET film of a PET material that exhibits a heat shrinkage ratio greater than 10%.

Conventional heat-shrinkable polyethylene terephthalate (PET) films are made from a PET composition containing a PET modifier, such as isophthalic acid (IPA), neopentyl glycol (NPG), or 1,4-cyclohexanedimethanol (CHDM). The modified PET material is thermally stretched at a stretching temperature (normally 10 to 15°C higher than the glass transition temperature (T_{g}) of the modified PET material) and is subsequently cooled so as to obtain the heat-shrinkable PET film that exhibits shape-memory characteristics which permit the heat-shrinkable PET film to be shrunk when heated to a temperature higher than the stretching temperature. TheCHDM modified heat-shrinkable PET film can achieve a heat shrinkage ratio of 60% based on the standard of JIS 21709. However, CHMD and its monomer are relatively expensive. The IPA modified heat-shrinkable PET film can also achieve a heat shrinkage ratio of about 60% based on the standard of JIS Z1709. However, it requires a longer shrinking time and a higher temperature (about 125"C) to reach the desired heat shrinkage ratio. The NPG modified heat-shrinkable PET film normally has a heat shrinkage ratio of less than 50% based on the standard of JIS Z1709, and requires an additional modifier to enhance the heat shrinkage ratio.

Therefore, the object of the present invention is to provide a heat-shrinkable PET film that can overcome at least one of the aforesaid drawbacks of the prior art.

Another object of this invention is to provide a method for making the heat-shrinkable PET film.

According to one aspect of the present invention, a heat-shrinkable PET film comprises a thermally stretched film body exhibiting shape-memory characteristics and made from a PET material of a modified PET composition that comprises terephthalic acid, ethylene glycol, and a modifier selected from the group consisting of 1, 3-dihydroxy-2-methylpropane, 1,3-dihydroxy-2-methylpropane alkoxylate, 2,5-dimethyl-2,5-hexanediol, and combinations thereof.

According to another aspect of the present invention, a method for making a heat-shrinkable PET film comprises: (a) forming a PET film of a PET material of a modified PET composition that comprises terephthalic acid, ethylene glycol, and a modifier selected from the group consisting of 1,3-dihydroxy-2-methylpropane, 1,3-dihydroxy-2-methylpropane alkoxylate, 2,5-dimethyl-2,5-hexanediol, and combinations thereof; (b) thermally stretching the PET film in a stretching direction under a temperature ranging from 50°C to 130°C such that the ratio of the film thickness of the PET film after stretching to that of the PET film before stretching ranges from 0.2 to 0.95; and (c) cooling the thermally stretched PET film.

Other features and advantages of the present invention will become apparent in the following detailed description of the preferred embodiments of this invention, with reference to the accompanying drawings, in which:

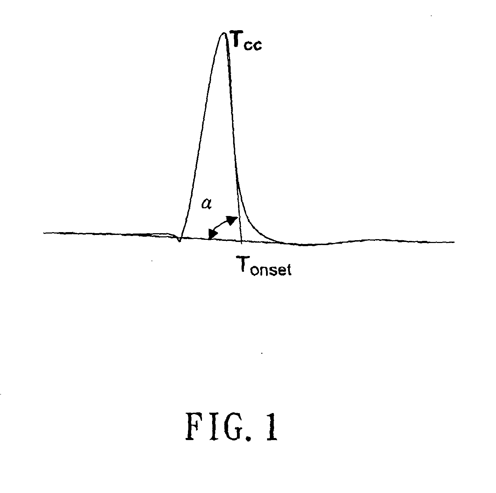

Fig. 1 is a DSC diagram showing a measured nucleation rate of a heat-shrinkable PET film.

It has been known in the art that certain polymer films, when stretched under a stretching temperature higher than their glass transition temperatures (T_{g}) and lower than their melting points (Tₘ), have a common feature that large molecules of the amorphous region of the polymer film will be extended along the stretching direction. These extended large molecules are 'frozen' , i.e., being set in shape, when cooled, and exhibit shape-memory characteristics or a heat-shrinkable ability. By virtue of this property, when the heat-shrinkable polymer film is heated to a temperature higher than the stretching temperature, the extended large molecules of the amorphous region of the polymer film begin to shrink along the stretching direction. Hence, it is possible to enhance the shrinking ability of a polymer film by increasing the extent of its amorphous phase, i.e., reducing the extent of its crystalline phase, by adding a modifier into a polymerization system to destroy nucleation and crystallization in the polymerization system. In addition, as indicated above that the goal of this invention is to overcome at least one of the aforesaid drawbacks associated with the aforesaid conventional modifiers, it is desirable to find a modifier that is less expensive and that can result in a shorter shrinking time for the heat-shrinkable PET film.

Accordingly, there is provided a heat-shrinkable PET film in this invention that can overcome at least one of the aforesaid drawbacks. The heat-shrinkable PET film of this invention comprises a thermally stretched film body exhibiting shape-memory characteristics and made from a PET material of a modified PET composition that comprises terephthalic acid, ethylene glycol, and a first modifier selected from the group consisting of 1,3-dihydroxy-2-methylpropane (DHMP), 1,3-dihydroxy-2-methylpropane alkoxylate (DHMPEO), 2,5-dimethyl-2,5-hexanediol, and combinations thereof.

Preferably, the thermally stretched PET film body has a film thickness ranging from 0.01mm to 0.1mm.

Preferably, the PET material has a glass transition temperature ranging from 40°C to 85°C, more preferably, from 60°C to 80°C, and most preferably, from 65°C to 75°C.

Preferably, the PET material has a melting point ranging from 170°C to 250°C , and more preferably, from 200°C to 210°C .

Preferably, the PET material is amorphous.

Preferably, the modified PET composition contains 2 to 40 mole% of the first modifier based on one mole of ethylene glycol, and more preferably, contains 12 to 40 mole% of the first modifier based on one mole of ethylene glycol. When the amount of the first modifier is less than 2 mole%, the desired heat-shrinkage ratio cannot be achieved. When the amount of the first modifier is greater than 40 mole%, the raw material cost is considerably increased, and the mechanical strength and thermal resistance are decreased. The applicant found that the PET material has a melting point ranging from 170 to 250°C when the amount of the first modifier ranges from 2 to 20 mole%, and is amorphous when the amount of the first modifier ranges from 20 to 40 mole%.

The PET material preferably has an intrinsic viscosity ranging from 0.6 to 1.2. When the intrinsic viscosity of the PET material is less than 0.6, the molecular weight of the PET material is too low to be suitable for processing. When the intrinsic viscosity of the PET material is greater than 1.2, stirring of the PET material is difficult, which can result in a decrease in the quality of the product formed from the PET material.

Preferably, the modified PET composition further comprises a second modifier selected from the group consisting of a diacid, a diol, and combinations thereof.

The diol of the second modifier is preferably selected from the group consisting of neopentyl glycol, isopentyl diol, polyethylene glycol, bisphenol A alkoxylate, 1,4-cyclohexanedimethanol, and combinations thereof, and is preferably present in an amount ranging from 1 to 40mole%, and more preferably, from 1 to 30 mole%, based on one mole of ethylene glycol. When the second diol is a mixture of polyethylene glycol, bisphenol A alkoxylate, and 1, 4-cyclohexanedimethanol, the PET film thus formed can be enhanced in properties, such as tensile strength, impact strength, and heat-shrinkable ratio.

The diacid of the second modifier is preferably selected from the group consisting of isophthalic acid, sebacid acid, naphthalene dicarboxylic acid, adipic acid, and combinations thereof, and is preferably present in an amount ranging from 1 to 30 mole%, and more preferably, from 2 to 20 mole%, based on one mole of ethylene glycol. When using isophthalic acid as the second modifier, the amorphous phase region of the PET material can be increased. When using adipic acid or sebacid acid as the second modifier, flexibility of the PET film thus formed can be increased. When using naphthalene dicarboxylic acid as the second modifier, the glass transition temperature, the thermal resistance and the impact strength of the PET material thus formed can be increased.

Additives, such as silica, silicon dioxide gel, aluminum oxide, caoline, calcium carbonate, titanium oxide, and barium sulfate, can be added into the modified PET composition.

The method of making the heat-shrinkable PET film includes the steps of: (a) forming the PET film of the PET material of the modified PET composition; (b) thermally stretching the PET film in a stretching direction under a stretching temperature ranging from 50°C to 130°C such that the ratio of the film thickness of the PET film after stretching to that of the PET film before stretching ranges from 0.2 to 0.95; and (c) cooling the thermally stretched PET film.

Preferably, the stretching temperature is 10 to 15°C higher than the glass transition temperature of the PET material, and the temperature for shrinking the stretched PET film is 10 to 15°C higher than the stretching temperature. Hence, the stretching temperature for stretching the PET film preferably ranges from 50°C to 100°C, and more preferably, from 70 to 90°C , and the temperature for shrinking the stretched PET film preferably ranges from 65 to 115 °C, and more preferably, from 85 to 100°C .

The heat-shrinkage ratio of the heat-shrinkable PET film of this invention can be adjusted by adjusting the modified PET composition, the stretching extent, and the stretching temperature based on the actual requirements. For instance, according to the standard of JIS Z1709, a heat-shrinkable PET film having a heat-shrinkage ratio of greater than 30% in one of MD (machine direction) and TD (transverse direction) directions and a heat-shrinkage ratio of less than 10% in the other of the MD and TD directions is suitable for application to shrinkable labels; a heat-shrinkage ratio of greater than 30% in both the MD and TD directions is suitable for application to general containers, batteries, and parts; a heat-shrinkage ratio of greater than 50% in one of the MD and TD directions is suitable for application to particular containers having curved or unusual shapes; and a heat-shrinkage ratio of greater than 50% in both the MD and TD directions is suitable for application to irregular shaped articles.

As mentioned above, the heat-shrinkage ratio of a heat-shrinkable film is mainly affected by the extent of the amorphous region which can be controlled by addition of a modifier into the polymerization system during polymerization of the PET material. Hence, the higher the crystalline extent, the poorer will be the heat-shrinkage ratio of the heat-shrinkable film. The crystalline extent of a PET material can be determined by measuring a nucleation rate (tan α), and a crystallization rate (G), which will be described in greater detail in the following paragraphs.

### Testing method:

### Determining the nucleation rate:

Placing a specimen of a heat-shrinkable PET film to be tested in a Differential Scanning Calorimetry (DSC) Instrument;
Raising a working temperature of the instrument at a rate of 10°C /min. from 30 to 300°C ; and
Lowering immediately the working temperature at a rate of 10°C/min. from 300 to 30°C .

A crystallization peak as illustrated in Fig. 1 is obtained through this DSC analysis. An angle α between the slope (the sharpest slope of the peak) and the baseline is determined. The nucleation rate is represented by tan α*.* The higher the value of tan α, the higher will be the nucleation rate and the higher will be the extent of the crystalline phase for the heat-shrinkable PET film. T_{cc} represents the crystallization temperature. Tₒₙₛₑₜ represents the temperature at an intersection of the baseline and the slope line.

### Determining the crystallization rate:

Placing a specimen of a heat-shrinkable PET film to be tested in a Differential Scanning Calorimetry (DSC) Instrument;
Raising a working temperature of the instrument at a rate of 160°C /min. from 30 to 280°C under a nitrogen gas flow rate of 50ml/min.;
Maintaining the working temperature at 280°C for 5 min.;
Lowering immediately the working temperature at a rate of 160°C /min. from 2 80°C to a crystallization temperature; and
Recording and calculating the half time crystallization and crystallization rate using Avrami equation, log{-ln[l-X(t)]} = log(k)+nlog(t). X(t) is the crystallization degree at time (t). k is a crystallization constant. N is Avrami index. The half time crystallization (the time that reaches 50% crystallization) is represented by t_{1/2}, which is equal to (ln2/k)^{1/n}. The crystallization rate is represented by G, which is equal to 1/ t_{1/2}. The higher the value of G, the higher will be the crystallization rate.

The merits of the heat-shrinkable PET film of this invention will become apparent with reference to the following Examples and Comparative Examples.

### Examples

### Nucleation rate and crystallization rate experiments

### Example 1 (E1)

Terephthalic acid, ethylene glycol, and 1, 3-dihydroxy-2--methylpropane (DHMP) (serving as the first modifier) in a mole ratio of 1:1.175:0.075 were uniformly mixed in a container and were formed into a paste. A stabilizer (75ppm) was added into and blended with the mixture. The paste was fed into an esterification reactor and underwent esterification under a pressure of about 3kg/cm² for 6 to 7 hours. The reaction temperature reached about 250°C at the end of the reaction. The mixture was then fed together with a catalyst of a mixture of Sb₂O₃ (300ppm) and cobalt acetate (50ppm), into a condensation rector and underwent condensation. The reactor temperature was raised to 285°C and the reactor was vacuumed to about 1 torr in two hours. The condensation was terminated when the intrinsic viscosity of the reaction product reached a range of from 0.7 to 0.9. The duration of the reaction time was about 4 to 5 hours.

### Example 2 (E2)

The reaction conditions of this example were similar to those of Example 1 except that the first modifier was 1,3-dihydroxy-2-methylpropane alkoxylate (DHMPEO).

### Comparative Examples 1-4 (CE1-4)

The reaction conditions of each of the comparative examples were similar to those of Example 1 except that comparative example 1 was without the first modifier and the first modifiers for comparative examples 2-4 were respectively polyethylene glycol 600 (PEG600), NPG, and CHDM.

### Comparative Example 5 (CE5)

The reaction conditions of comparative example 5 were similar to those of Example 1 except that this comparative example was without the first modifier and that a portion of terephthalic acid was substituted with isophthalic acid (IPA). The mole ratio of terephthalic acid:IPA:ethylene glycol was 1:0.064:1.33.

### Comparative Example 6 (CE6)

The reaction conditions of comparative example 6 were similar to those of Example 1 except that this comparative example was without the first modifier and that a portion of terephthalic acid was substituted with adipic acid (AA). The mole ratio of terephthalic acid:AA:ethylene glycol was 1:0.064:1.33.

Examples 1 and 2 and Comparative Examples 1-6 were subjected to the nucleation rate (tan α) and the crystallization rate (G) tests. Table 1 shows the test results for Examples 1 and 2 and Comparative Examples 1-6.

**Table 1**

| | **E1** | **E2** | **CE1** | **CE2** | **CE3** | **CE4** | **CE5** | **CE6** |
|---|---|---|---|---|---|---|---|---|
| **T_{cc}-Tₒₙₛₑₜ °C** | 20 | 27.6 | 9.1 | 9.0 | 16.6 | 15.8 | 15.0 | 12.6 |
| α, **degree** | 55 | 38 | 84 | 70 | 60 | 75 | 75 | 80 |
| **tan** α | 1.41 | 0.78 | 9.51 | 2.74 | 1.73 | 3.73 | 3.73 | 5.67 |
| **t_{1/2} min** | 4.296 | 5.118 | 1.47 | 1.876 | 3.443 | 4.321 | 4.238 | 3.409 |
| **G l/min** | 0.23 | 0.2 | 0.68 | 0.53 | 0.29 | 0.23 | 0.24 | 0.29 |

The results show that Examples 1 and 2 (E1 and E2) have lower nucleation rate and crystallization rate than those of Comparative Examples (CE1-6).

### Shrinkage experiments

### Example 3

Terephthalic acid, ethylene glycol, and 1,3-dihydrvxy-2-methylpropane in a mole ratio of 1:0.998:0.249 were uniformly mixed in a container and were formed into a paste. A stabilizer (75ppm) was added into and blended with the mixture. The paste was fed into an esterification reactor and underwent esterification under a pressure of about 3kg/cm² for 6 to 7 hours. The reaction temperature reached about 250°C at the end of the reaction. The mixture was then fed together with a catalyst of a mixture of Sb₂O₃ (300ppm) and cobalt acetate (50ppm), into a condensation rector and underwent condensation. The reactor temperature was raised to 285°C and the reactor was vacuumed to about 1 torr in two hours. The condensation was terminated when the intrinsic viscosity of the reaction product reached a range of from 0.7 to 0.9. The duration of the reaction time was about 4 to 5 hours. The product thus formed, having a Tg of 70°C, was dried under a temperature of 60°C for 12 hours, and was fed into an extruder (L/D = 32, φ =45, compression ratio =3.0) under a working temperature of from 200 to 220°C so as to form a PET film. The PET film was cut into 70mm X 70mm specimens (S1-S7). Each specimen was bilaterally stretched in the machine direction (MD) and the transverse direction (TD) at a stretching speed of 100 rpm and gearbox parameters of 200mm/min based on the standard of JIS 21709. Specimens S1-S4 were stretched under different temperatures, which were respectively 75°C , 80°C . 85°C , 90°C , and each was stretched to 3 times of its original length. Specimens S5-S7 were stretched under the same temperature (80°C), and were respectively stretched 2, 3, and 4 times of the original length. Each stretched specimen was cut into a 100mm X 100mm piece which was placed into a water bath having a constant temperature of 95°C for 10 seconds. The heat shrinkage ratio of each specimen was calculated based on the following equation.

Heat Shrinkage Ratio= [(L-1)/L] × 100%, where L represents the length of the stretched specimen before being heated in the water bath and 1 represents the length of the stretched specimen after being heated in the water bath. Table 2 shows the shrinkage test results for the specimens S1-37.

**Table 2**

| Example 3 | S1 | S2 | S3 | S4 | S5 | S6 | S7 |
|---|---|---|---|---|---|---|---|
| Stretching temperature °C | 75 | 80 | 85 | 90 | 80 | 80 | 80 |
| Stretching times | 3 | 3 | 3 | 3 | 2 | 3 | 4 |
| shrinkage ratio, % | 67.5 | 68 | 64 | 57 | 55.5 | 68 | 70 |

### Example 4

The reaction conditions of this example were similar to those of Example 3 except that the mole ratio of Terephthalic acid:ethylene glycol: 1, 3-dihydroxy-2-methylpropane was 1: 1. 05: 0. 2. The PET film thus formed has a melting point of 206.52°C and a crystallization temperature (T_{cc}) of 133.49°C . Specimens (S8-S14) of the PET film were prepared for the heat shrinkage test similar to that of Example 3. Table 3 shows the shrinkage test results for the specimens S8-S14.

**Table 3**

| Example 3 | S8 | S9 | S10 | S11 | S12 | S13 | S14 |
|---|---|---|---|---|---|---|---|
| Stretching temperature °C | 75 | 80 | 85 | 90 | 80 | 80 | 80 |
| Stretching times | 3 | 3 | 3 | 3 | 2 | 3 | 4 |
| shrinkage ratio, % | 64.5 | 66.2 | 61 | 54 | 51 | 64 | 67 |

As illustrated in the shrinkage experiments, the heat shrinkage ratio of the PET film modified by the first modifiers of this invention can reach 70%, which is higher than that achieved using the conventional modifiers.

It is noted that although no experiments were made for 2,5-dimethyl-2,5-hexanediol, this compound has asymmetric dimethyl groups and a longer chain length than that of ethylene glycol that can result in a decrease in the nucleation rate and the crystallization rate of the PET polymerization system.

It has thus been shown that, by using 1,3-dihydroxy-2-methylpropane, 1,3-dihydroxy-2-methylpropane alkoxylate, 2,5-dimethyl-2,5-hexanediol, or a combination thereof as the first modifier in the modified PET composition of this invention, the aforesaid drawbacks associated with the prior art can be eliminated.

## Claims

1. A heat-shrinkable PET film comprising a thermally stretched film body exhibiting shape-memory characteristics and made from a PET material of a modified PET composition that comprises terephthalic acid, ethylene glycol, and a first modifier selected from the group consisting of 1,3-dihydroxy-2-methylpropane, 1,3-dihydroxy-2-methylpropane alkoxylate, 2,5-dimethyl-2,5-hexanediol, and combinations thereof.

2. The heat-shrinkable PET film of claim 1, wherein said thermally stretched film body exhibits a heat shrinkage ratio greater than 10% in a stretching direction under a temperature ranging from 60°C to 140 °C .

3. The heat-shrinkable PET film of claim 2, wherein said thermally stretched film body exhibits a heat shrinkage ratio greater than 30% in the stretching direction under a temperature ranging from 60°C to 140 °C.

4. The heat-shrinkable PET film of claim 2, wherein said thermally stretched film body has a film thickness ranging from 0.01mm to 0.1mm.

5. The heat-shrinkable PET film of claim 1, wherein said PET material has a glass transition temperature ranging from 40°C to 85°C .

6. The heat-shrinkable PET film of claim 1, wherein said PET material has a melting point ranging from 170°C to 250°C .

7. The heat-shrinkable PET film of claim 1, wherein said PET material is amorphous.

8. The heat-shrinkable PET film of claim 1, wherein said PET material has an intrinsic viscosity ranging from 0.6 to 1.2.

9. The heat-shrinkable PET film of claim 1, wherein said modified PET composition contains 2 to 40 mole% of said first modifier based on one mole of ethylene glycol.

10. The heat-shrinkable PET film of claim 9, wherein said modified PET composition contains 12 to 40 mole% of said first modifier based on one mole of ethylene glycol.

11. The heat-shrinkable PET film of claim 1, wherein said modified PET composition further comprises a second modifier selected from the group consisting of a diacid, a diol, and combinations thereof.

12. The heat-shrinkable PET film of claim 11, wherein said diol is selected from the group consisting of neopentyl glycol, isopentyl diol, polyethylene glycol, bisphenol A alkoxylate, 1,4-cyclohexanedimethanol, and combinations thereof.

13. The heat-shrinkable PET film of claim 12, wherein said modified PET composition contains 1 to 40 mole% of said diol based on one mole of ethylene glycol.

14. The heat-shrinkable PET film of claim 11, wherein said diacid is selected from the group consisting of isophthalic acid, sebacid acid, naphthalene dicarboxylic acid, adipic acid, and combinations thereof.

15. The heat-shrinkable PET film of claim 1, wherein said modified PET composition contains 1 to 30 mole% of said diacid based on one mole of terephthalic acid.

16. A heat-shrinkable PET film comprising a PET film body exhibiting shape-memory characteristics and made from a PET material of a modified PET composition that comprises terephthalic acid, ethylene glycol, and a modifier selected from the group consisting of 1,3-dihydroxy-2-methylpropane, 1,3-dihydroxy-2-methylpropane alkoxylate, 2,5-dimethyl-2,5-hexanediol, and combinations thereof;
wherein said PET film body exhibits a heat shrinkage ratio greater than 10% in a stretching direction under a temperature ranging from 60°C to 140 °C.

17. A method for making a heat-shrinkable PET film, comprising:
(a) forming a PET film of a PET material of a modified PET composition that comprises terephthalic acid, ethylene glycol, and a modifier selected from the group consisting of 1,3-dihydroxy-2-methylpropane, 1,3-dihydroxy-2-methylpropane alkoxylate, 2,5-dimethyl-2,5-hexanediol, and combinations thereof;
(b) thermally stretching the PET film in a stretching direction under a temperature ranging from 50°C to 130°C such that the ratio of the film thickness of the PET film after stretching to that of the PET film before stretching ranges from 0.2 to 0.95; and
(c) cooling the thermally stretched PET film.

18. The method of claim 17, wherein the temperature when conducting the stretching operation in step (b) ranges from 70°C to 100°C .
